# EUROPÄISCHE PATENTSCHRIFT

(11) **EP 2 793 586 B1**
(45) Veröffentlichungstag und Bekanntmachung des Hinweises auf die Patenterteilung: **16.03.2016**
(21) Anmeldenummer: 12799142.0
(22) Anmeldetag: 06.12.2012
(51) Int. Cl.: A01N 57/20, A01N 25/22, A01P 13/00

(54) **FORMULIERUNGEN FÜR DIE LANDWIRTSCHAFT ENTHALTEND METHYLGLYCINDIACETAT (MGDA) UND/ODER GLUTAMINSÄUREDIACETAT (GLDA) SOWIE ORGANISCHE PHOSPHATE, PHOSPHONATE ODER PHOSPHITE**
FORMULATIONS FOR AGRICULTURE CONTAINING METHYLGLYCINE DIACETATE (MGDA) AND/OR GLUTAMATE DIACETATE (GLDA) AS WELL AS ORGANIC PHOSPHATES, PHOSPHONATES OR PHOSPHITES
FORMULATIONS POUR L'AGRICULTURE CONTENANT DU DIACÉTATE DE MÉTHYLGLYCINE (MGDA) ET/OU DU DIACÉTATE D'ACIDE GLUTAMIQUE (GLDA) AINSI QUE DES PHOSPHATES, PHOSPHONATES OU PHOSPHITES ORGANIQUES

(30) Priorität: 21.12.2011 EP 11194743
(43) Veröffentlichungstag der Anmeldung: 29.10.2014
(73) Patentinhaber: BASF SE, 67056 Ludwigshafen (DE)
(72) Erfinder: HÜFFER, Stephan, 67063 Ludwigshafen (DE); GARCIA MARCOS, Alejandra, 67063 Ludwigshafen (DE); KLINGELHOEFER, Paul, 68165 Mannheim (DE); SCHNABEL, Gerhard, 63820 Elsenfeld (DE)
(86) Internationale Anmeldenummer: PCT/EP2012/074588
(87) Internationale Veröffentlichungsnummer: WO 2013/092225

(56) Entgegenhaltungen:
- WO-A2-2007/030649
- US-A- 5 948 421
- US-A1- 2006 009 360
- SHEA, P.J; TUPY, D. R.: "Reversal of Cation-induced Reduction of Glyphosate Activity with EDTA", WEED SCIENCE, Bd. 32, 1984, Seiten 802-806, XP009168952,
- Dorota Kolodynska: "Chelating Agents of a New Generation as an Alternative to Conventional Chelators for Heavy Metal Ions Removal from Different Waste Waters", intechopen, 22. September 2011 (2011-09-22), XP55060229, Gefunden im Internet: URL:http://cdn.intechopen.com/pdfs/20357/I nTech-Chelating_agents_of_a_new_generation _as_an_alternative_to_conventional_chelato rs_for_heavy_metal_ions_removal_from_diffe rent_waste_waters.pdf [gefunden am 2013-04-18]

## Beschreibung

Die vorliegende Erfindung betrifft die Verwendung von Formulierungen, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine organische Verbindung, gewählt aus organischen Phosphaten, organischen Phosphonaten und organischen Phosphiten und Salzen der vorstehend genannten organischen Verbindungen, und
(C) gegebenenfalls Wasser,
zum Aufbringen auf Pflanzen oder Land.

Weiterhin betrifft die vorliegende Erfindung Formulierungen, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine organische Verbindung, gewählt aus Herbiziden, die gewählt sind aus organischen Phosphaten, organischen Phosphonaten und organischen Phosphiten und Salzen der vorstehend genannten organischen Verbindungen, und
(C) gegebenenfalls Wasser.

Weiterhin betrifft die vorliegende Erfindung ein Verfahren zur Herstellung der erfindungsgemäßen Formulierungen.

Es ist seit langem das Bestreben, die Erträge von Böden zu verbessern, was die Fruchtbarkeit betrifft. Dabei spielt nicht nur die Düngung des Bodens eine Rolle, sondern auch die Bekämpfung von unerwünschten Pflanzen und Tieren, die einen Erntertrag reduzieren könnten.

Diverse organische Phosphor-haltige Verbindungen, beispielsweise organische Phosphate, organische Phosphonate und organische Phosphite und Salze der vorstehend genannten organischen Verbindungen, haben verschiedenartige Wirkungen auf Organismen, wie Unkräuter, Ungeziefer und unerwünschte Pilze. Problematisch ist bei der Aufbringung von vielen dieser organischen Verbindungen, dass sie mit Bestandteilen des Bodens wie Eisenoxiden, Aluminiumoxiden, Schichtsilikaten, Kalzium- und Magnesiumverbindungen reagieren und/oder von diesen adsorbiert werden können und dabei in eine wasserunlösliche und somit für Pflanzen nicht mehr verfügbare Form überführt werden. Dieser Vorgang wird auch Mineralisierung genannt. Die Mineralisierung erfolgt je nach Bodenzusammensetzung in einem Zeitraum von 2 bis 14 Tagen. Trotz eines an sich hohen Angebots oder gar eines Überangebots an organischen Phosphorverbindungen ist die Wirkung daher unbefriedigend. Gleichzeitig wird nach der gegenwärtigen Praxis der im Boden und Umwelt gespeicherte Anteil von Wirkstoffen stetig erhöht, was ebenfalls nicht erwünscht ist.

Ein ähnliches Problem ist, dass eine Mineralisierung von organischen Phosphor-haltigen Verbindungen auch durch die Erdalkalimetallionen erfolgen kann, die in dem Wasser enthalten sein können, das man zur Herstellung verdünnter Sprühlösung einsetzt. Je nach Wasserhärte und dem Verdünnungsgrad können so signifikante Anteile an Wirkstoff eliminiert werden.

Vielfach bringt man daher beispielsweise Glyphosat zusammen mit erheblichen Mengen Ammoniumsulfat auf den Boden auf. Die Mengen an Ammoniumsulfat können dabei erheblich sein. So offenbart EP 0 290 416 ein typisches Konzentrat 74 g/l Glyphosat (freie Säure), 49 g/l Glyphosatmonoisopropylammoniumsalz, 120 g/l Fettaminethoxylat und 280 g/l Ammoniumsulfat. Man setzt typischerweise zwischen 100 und 600 Liter Formulierung/ha Ackerland ein. Dies entspricht einem Wirkstoffaustrag von 1-6 kg /ha Ackerland. Die Formulierung enthält mehr Ammoniumsulfat als Wirkstoff.

D. Kolodynska offenbart in Weed Science 1984, 32, 802, dass Glyphosat zusammen mit EDTA die phytotoxischen Wirkung von Glyphosat gegenüber Weizen verringert.

Aus US 2006/0009360 ist bekannt, dass Kombinationen von Pestiziden mit EDTA die augenreizende Wirkung von Pestiziden verringern können. Es wurde außerdem festgestellt, dass eine Zugabe von EDTA der Deaktivierung von Glyphosat durch Metallionen in wässriger Lösung entgegenwirken kann.

Es bestand also die Aufgabe, Formulierungen bereit zu stellen, deren organische Phosphorverbindungen gut durch Böden oder Pflanzen aufgenommen werden kann, beispielsweise so, dass die Resorptionsfähigkeit über einen Zeitraum von bis zu 8 Wochen gewährleistet wird. Es bestand weiterhin die Aufgabe, Verwendungen von Formulierungen bereit zu stellen, durch die organische Phosphorverbindungen gut durch Böden und insbesondere Pflanzen aufgenommen werden können. Weiterhin bestand die Aufgabe, ein Verfahren bereit zu stellen, durch das organische Phosphorverbindungen gut bioverfügbar gemacht werden kann.

Dementsprechend wurde die eingangs definierten Verwendungen und Formulierungen gefunden.

Erfindungsgemäß verwendet man mindestens eine Formulierung, enthaltend
(A) ein oder mehrere Aminocarboxylate, kurz auch Aminocarboxylat (A) oder auch summarisch Verbindung (A) genannt, gewählt aus Methylglycindiacetat (MGDA) und seinen Alkalimetallsalzen und Glutaminsäurediacetat (GLDA) und seinen Alkalimetallsalzen
(B) mindestens eine organische Verbindung, kurz auch Verbindung (B) genannt, gewählt aus organischen Phosphaten, organischen Phosphonaten und organischen Phosphiten und Salzen der vorstehend genannten organischen Verbindungen, und
(C) gegebenenfalls Wasser,
zum Aufbringen auf Pflanzen oder Land.

Verbindung (A) kann als freie Säure oder vorzugsweise in partiell oder vollständig neutralisierter Form, also als Salz, vorliegen. Als Gegenionen kann man beispielsweise anorganische Kationen, beispielsweise Ammonium oder Alkali, wählen, bevorzugt Na⁺, K⁺, oder organische Katio-nen, bevorzugt mit einem oder mehreren organischen Resten substituiertes Ammonium, insbesondere Mono-C₁-C₄-Alkylammonium, beispielsweise Isopropylammonium, weiterhin Triethanolammonium, N,N-Diethanolammonium, N-Mono-C₁-C₄-alkyldiethanolammonium, beispielsweise N-Methyl-diethanolammonium oder N-n-Butyldiethanolammonium, und N,N-Di-C₁-C₄-alkylethanolammonium. Bevorzugt sind Alkalimetallionen, besonders bevorzugt Na⁺ und K⁺.

Verbindung (A) wählt man aus Methylglycindiacetat (MGDA) und Glutaminsäurediacetat (GLDA) sowie deren Derivaten und vorzugsweise deren Salzen, insbesondere deren Natrium- und Kaliumsalzen. Ganz besonders bevorzugt sind Methylglycindiacetat sowie das Trinatriumsalz von MGDA.

Verbindung (B) wählt man aus organischen Phosphaten, organischen Phosphonaten und organischen Phosphiten und Salzen der vorstehend genannten organischen Verbindungen. Bevorzugte Verbindungen (B) sind organische Phosphonate.

Im Rahmen der vorliegenden Erfindung werden organische Phosphate als Verbindungen definiert, die der allgemeinen Formel (I) 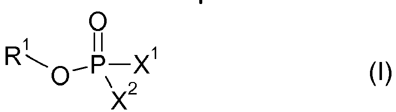 entsprechen. Dabei sind die Variablen wie folgt definiert:
- R¹: ist gewählt aus C₁-C₂₀-Alkyl, C₃-C₁₀-Cycloalkyl oder C₆-C₁₄-Aryl, unsubstituiert oder mindestens einfach substituiert mit C₁-C₆-Alkyl, Phenyl, OH, OR², NH₂, NHR², N(R²)₂, SH, SR², CH₂OH, CH₂OR², CH₂NH₂, CH₂NHR², CH₂N(R²)₂, CH₂SH, CH₂SR², CH₂C₆H₅, CH₂-COOH, CH₂COOM¹, (CH₂)₂-COOH, (CH₂)₂COOM¹, CH₂-NH₂(+)-CH₂COOH, CH₂-NH₂(+)-CH₂COO M¹, (CH₂)₂-NH₂(+)-CH₂COOH, (CH₂)₂-NH₂(+)-CH₂COO M¹, CH₂-NH-CH₂COOH, CH₂-NH-CH₂COO M¹, (CH₂)₂-NH-CH₂COOH, (CH₂)₂-NH-CH₂COO M¹;
wobei in C₁-C₂₀-Alkyl oder C₃-C₁₀-Cycloalkyl mindestens ein C-Atom ersetzt sein kann durch Sauerstoff, NH, NR², oder Schwefel,
- R²: C₁-C₆-Alkyl, Phenyl, Benzyl, CH₂OH, CH₂OR², CH₂NH₂, CH₂NHR², CH₂N(R²)₂, CH₂SH, CH₂SR²,
- X¹: gewählt aus OH und OM¹, wobei M¹ gewählt wird aus Alkalimetallkationen, beispielsweise Na⁺, K⁺, weiterhin Erdalkalimetallkationen, beispielsweise Mg²⁺, und Ammoniumionen, unsubstituiert oder ein- oder mehrfach substituiert mit C₁-C₄-Alkyl oder CH₂CH₂OH. Beispiele für substituierte Ammoniumionen sind CH₃NH₃⁺, (CH₃)₂NH₂⁺, (CH₃)₃NH⁺, (CH₃)₄N⁺, CH₃CH₂NH₃⁺, (C₂H₅)₂NH₂⁺, (C₂H₅)₃NH⁺, (C₂H₅)₄N⁺, (CH₃)₂CHNH₃⁺, (CH₃)₂CHNH(CH₃)₂⁺, (CH₃)₂CHNH₂(CH₃)⁺, CH₃NH(CH₂CH₂OH)₂⁺, (CH₃)₂NH(CH₂CH₂OH)⁺,
- X²: gewählt aus OH, OM¹ und OR¹, wobei zwei R¹ bzw. M¹ gleich oder verschieden sein können.

Im Rahmen der vorliegenden Erfindung werden organische Phosphite als Verbindungen definiert, die der allgemeinen Formel (II) 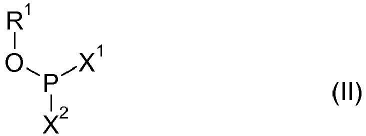 entsprechen. Dabei sind die Variablen wie vorstehend definiert.

Bevorzugt wählt man Verbindung (B) aus organischen Phosphonaten. Im Rahmen der vorliegenden Erfindung werden organische Phosphonate als Verbindungen definiert, die der allgemeinen Formel (III) 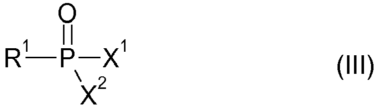 entsprechen. Dabei sind die Variablen wie vorstehend definiert.

In einer Ausführungsform der vorliegenden Erfindung wählt man Verbindung (B) aus Herbiziden, insbesondere solchen, die gegen einkeimblättrige oder zweikeimblättrige Unkräuter wirksam sind. Besonders bevorzugt sind solche Herbizide, die gegen einkeimblättrige und zweikeimblättrige Unkräuter wirksam sind.

In einer Ausführungsform der vorliegenden Erfindung wählt man Verbindung (B) aus Glyphosat und Salzen von Glyphosat, beispielsweise Salzen mit Kationen M¹. Besonders bevorzugte Kationen sind K⁺, das Ammonium- und das Isopropylammoniumion. Dabei kann Glyphosat in partiell oder vollständig neutralisierter Form vorliegen.

In einer Ausführungsform der vorliegenden Erfindung wählt man Verbindung (B) aus Mono-isopropylammoniumglyphosat.

Erfindungsgemäß verwendet man Formulierungen, die Wasser (C) enthalten können. Erfindungsgemäße Formulierungen können Wasser (C) enthalten. Wasser kann beispielsweise in Anteilen von 0,1 bis 10 Gew.-%, bezogen auf gesamte erfindungsgemäß verwendete bzw. erfindungsgemäße Formulierung enthalten sein. In einer anderen Ausführungsform enthält erfindungsgemäße Formulierung bzw. erfindungsgemäß verwendete Formulierung mehr als 10, aber bis zu 95 Gew.-% Wasser. In einer anderen Ausführungsform der vorliegenden Erfindung enthält erfindungsgemäße Formulierung bzw. erfindungsgemäß verwendete Formulierung im Bereich von 95,01 bis 99,9 Gew.-% Wasser (C).

Erfindungsgemäße Formulierungen können als Pulver vorliegen, als feuchtes Pulver, als Suspension, als Pulver-Slurry (Suspension) oder als Lösung. Erfindungsgemäße Formulierungen können beispielsweise Konzentrate sein oder Sprühlösungen.

Um erfindungsgemäße Formulierungen einzusetzen, kann man sie auf Pflanzen oder auf Land oder Wachstumssubstrat aufbringen, beispielsweise als Wirkstoffformulierung oder in Kombination mit einem Düngemittel. Dazu kann man erfindungsgemäße Formulierung manuell oder maschinell auf unbewachsenen oder bewachsenen Boden oder Wachstumssubstrat aufbringen, oder man kann erfindungsgemäße Formulierung manuell oder maschinell auf Pflanzen aufbringen.

Geeignete Pflanzen sind beispielsweise Gemüse, Gräser, Getreide, Bäume, Hackfrüchte, Büsche, Stauden und Blumen. Besonders bevorzugt sind Raps, Weizen, Hirse, Roggen, Gerste, Avocado, Zitrusfrüchte, Mango, Kaffee, Laubbaum-Kulturen, Trauben und andere Beerenpflanzen-, Bohnen, insbesondere Sojabohnen, weiterhin Mais, Tomaten, Gurken, insbesondere Zucchini und Salatgurken, Kürbisse, weiterhin Salat, Kartoffeln, Runkelrüben, Zuckerrüben, Paprika, Zuckerrohr, Hopfen, Tabak, Ananas, Palmen, insbesondere Kokospalmen, weiterhin Kautschukbäume und Parakautschukbäume (Hevea brasiliensis), und Zierpflanzen, insbesondere Rosen, Dahlien, Tulpen, Narzissen, Osterglocken, Nelken und Chrysanthemen.

Zum Aufbringen kann man erfindungsgemäße Formulierung beispielsweise per Flugzeug oder Fahrzeug über einer zu behandelnden Fläche ausbringen, oder man kann sie mit Hilfe einer Bewässerungsanlage ausbringen. Arten des Aufbringens sind Versprühen und Wurzeldosierung, flüssig oder fest.

In einer Ausführungsform der vorliegenden Verwendung verwendet man erfindungsgemäß mindestens eine Formulierung, die mindestens eine organische Verbindung (D) enthält, gewählt aus Harnstoff und Zitronensäure und ihren Alkalimetallsalzen. Bevorzugte Alkalimetallsalze von Zitronensäure sind Trikaliumcitrat ("Kaliumcitrat") und das Trinatriumsalz der Zitronensäure ("Natriumcitrat").

In einer Ausführungsform verwendet man erfindungsgemäß mindestens eine Formulierung, die mindestens eine anorganische Verbindung (E) enthält. Bevorzugte anorganische Verbindungen (E) sind Ammoniumsalze von Mineralsäuren, insbesondere Ammoniumsulfat.

In einer Ausführungsform der vorliegenden Erfindung verwendet man erfindungsgemäß mindestens eine Formulierung, die mindestens einen Zusatz (F) enthält, gewählt aus Netzmitteln, Tensiden, Sprühhilfsmitteln und Spreitungsmitteln. Besonders geeignete Zusätze (F) sind Tenside, beispielsweise C₈-C₂₀-Alkylsulfate, C₈-C₂₀-Alkylsulfonate und C₈-C₂₀-Alkylethersulfate mit einer bis 6 Ethylenoxideinheiten pro Molekül. Weitere geeignete Tenside sind nichtionische Tenside wie beispielsweise Alkylpolyglucoside und C₆-C₂₀-Alkylaminoalkoxylate mit beispielsweise 2 bis 30 Alkoxylateinheiten pro mol, bevorzugt C₆-C₂₀-Alkylaminoethoxylate mit beispielsweise 2 bis 30 Ethylenoxideinheiten pro mol und insbesondere Talgfettaminethoxylate mit 10 bis 20 Ethylenoxideinheiten pro mol.

In einer Ausführungsform der vorliegenden Erfindung verwendet man erfindungsgemäß mindestens eine Formulierung, die mindestens ein Polyaminocarboxylat enthält.

Unter Polyaminocarboxylaten werden im Rahmen der vorliegenden Erfindung solche organischen Verbindungen verstanden, die mindestens zwei tertiäre Aminogruppen aufweisen, die unabhängig voneinander je eine oder zwei CH₂-COOH-Gruppen aufweisen, die partiell oder vollständig neutralisiert sein kann bzw. können, bevorzugt mit Alkalimetall, besonders bevorzugt mit Na⁺ oder K⁺.

In einer anderen Ausführungsform der vorliegenden Erfindung wählt man Polyaminocarboxylate aus solchen organischen Verbindungen, die mindestens zwei sekundäre Aminogruppen aufweisen, die je eine CH(COOH)CH₂-COOH-Gruppe aufweisen, die - wie vorstehend erwähnt - partiell oder vollständig neutralisiert sein können.

Bevorzugte Polyaminocarboxylate sind gewählt aus 1,2-Diaminoethantetraessigsäure (EDTA), Ethylendiamindisuccinat (EDDS), Tetraacetylmethylendiamin, Tetraacetylhexylendiamin, Diethylentriaminpentaacetat (DTPA), Hydroxyethylendiamintriacetat (HEDTA), und ihre jeweiligen Salze, insbesondere Alkalimetallsalze, ganz besonders bevorzugt die Natriumsalze und die Kaliumsalze sowie gemischte Natriumkaliumsalze.

Ein weiterer Gegenstand der vorliegenden Erfindung sind Formulierungen, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine Verbindung (B), gewählt aus Herbiziden, die gewählt sind aus organischen Phosphaten, organischen Phosphonaten und organischen Phosphiten und Salzen der vorstehend genannten organischen Verbindungen, und
(C) gegebenenfalls Wasser.

Aminocarboxylate (A), Polyaminocarboxylate und Verbindungen (B) sind vorstehend beschrieben.

In einer Ausführungsform der vorliegenden Erfindung enthält erfindungsgemäße Formulierung mindestens ein Aminocarboxylat (A) und mindestens ein Polyaminocarboxylat.

In einer Ausführungsform der vorliegenden Erfindung wählt man Verbindung (B) aus Herbiziden, die gegen einkeimblättrige oder zweikeimblättrige Unkräuter wirksam sind. Besonders bevorzugt sind solche Herbizide, die gegen einkeimblättrige und zweikeimblättrige Unkräuter wirksam sind.

Man wählt Verbindung (B) aus organischen Phosphaten, organischen Phosphonaten und organischen Phosphiten und Salzen der vorstehend genannten organischen Verbindungen.

Besonders bevorzugt wählt man Verbindung (B) aus Glyphosat und Salzen von Glyphosat, insbesondere Monoisopropylammoniumglyphosat.

In einer Ausführungsform der vorliegenden Erfindung enthält erfindungsgemäße Formulierung: insgesamt im Bereich von 1 bis 90 Gew.-%, bevorzugt 10 bis 50 Gew.-% Aminocarboxylat (A), insgesamt im Bereich von 0,1 bis 25 Gew.-%, bevorzugt 0,25 bis 5 Gew.-% Verbindung (B).

Dabei sind Angaben in Gew.-% jeweils auf den Feststoffgehalt an erfindungsgemäßer Formulierung bezogen.

Erfindungsgemäße Formulierung kann weiterhin Wasser (C) enthalten.

In einer Ausführungsform der vorliegenden Erfindung enthält erfindungsgemäße Formulierung mindestens einen weiteren Stoff, gewählt aus
(D) organische Verbindungen, die gewählt sind aus Harnstoff und Zitronensäure und ihren Alkalimetallsalzen,
(E) anorganischen Stoffen, bevorzugt Ammoniumsalzen von Mineralsäuren, insbesondere Ammoniumsulfat,
(F) Zusätzen, gewählt aus Netzmitteln, Tensiden, Spreitungsmitteln und Sprühhilfsmitteln.

Organische Verbindungen (D), anorganische Stoffe (E), Polyaminocarboxylate und Zusätze (F) sind vorstehend beschrieben.

Besonders geeignete Zusätze (F) sind Tenside, beispielsweise C₈-C₂₀-Alkylsulfate, C₈-C₂₀-Alkylsulfonate und C₈-C₂₀-Alkylethersulfate mit einer bis 6 Ethylenoxideinheiten pro Molekül. Weitere geeignete Tenside sind nichtionische Tenside wie beispielsweise Alkylpolyglucoside und C₆-C₂₀-Alkylaminoalkoxylate, bevorzugt C₆-C₂₀-Alkylaminoethoxylate und insbesondere Talgfettaminethoxylate.

In einer Ausführungsform der vorliegenden Erfindung enthält erfindungsgemäße Formulierung insgesamt im Bereich von null bis 25 Gew.-%, bevorzugt 1 bis 10 Gew.-% organische Verbindung(en) (D),
insgesamt im Bereich von null bis 5 Gew.-%, bevorzugt 0,1 bis 2,5 Gew.-% anorganischen Stoff bzw. anorganische Stoffe (E),
insgesamt im Bereich von null bis 25 Gew.-%, bevorzugt 1 bis 15 Gew.-% Zusatz bzw. Zusätze (F),
im Bereich von null bis 10 Gew.-% Polyaminocarboxylat.

Dabei sind Angaben in Gew.-% jeweils auf den Feststoffgehalt an erfindungsgemäßer Formulierung bezogen.

In einer Ausführungsform der vorliegenden Erfindung weist erfindungsgemäße Formulierung einen pH-Wert im Bereich von 4 bis 11, bevorzugt 5 bis 9 auf. In einer speziellen Variante weist erfindungsgemäße Formulierung einen pH-Wert im Bereich von 9 bis 11 auf.

Erfindungsgemäße Formulierungen lassen sich besonders gut verwenden, um die herbizide Wirkung von organischen Verbindungen (B) auf Nutzpflanzen effizient zu verbessern, ohne ohne dass eine Anreicherung über die Nahrungskette begünstigt würde. Besonders vorteilhaft ist die Verwendung von erfindungsgemäßen Formulierungen in Umgebungen mit häufigen Regenfällen, in denen organische Verbindungen (B) auch bei einer Aufbringung analog zu einer Blattdüngung zwar zu einem erheblichen Anteil in den Boden gewaschen werden, aber bei Verwendung erfindungsgemäßer Formulierung im Boden nicht mehr durch Mineralisierung unwirksam werden.

Ein weiterer Gegenstand der vorliegenden Erfindung ist ein Verfahren zur Herstellung von erfindungsgemäßen Formulierungen, im Rahmen der vorliegenden Erfindung auch erfindungsgemäßes Herstellungsverfahren genannt.

In einer Ausführungsform der erfindungsgemäßen Herstellungsverfahrens geht man so vor, dass man
(A) ein oder mehrere Aminocarboxylat(e) (A), gewählt aus Methylglycindiacetat (MGDA) und seinen Alkalimetallsalzen und Glutaminsäurediacetat (GLDA) und seinen Alkalimetallsalzen, und
(B) mindestens eine organische Verbindung, gewählt aus Herbiziden, die gewählt sind aus organischen Phosphaten, organischen Phosphiten und organischen Phosphonaten und Salzen der vorstehend genannten Verbindungen,
miteinander in Gegenwart von Wasser (C) vermischt und
gegebenenfalls das Wasser (C) vollständig oder teilweise entfernt.

In einer Ausführungsform der vorliegenden Erfindung löst man mindestens eine Verbindung (A) und mindestens eine Verbindung (B) in Wasser (C), beispielsweise in 10 Vol.-% bis zum 10-fachen (bezogen auf Volumen), bezogen auf die Summe an Verbindung (A) und anorganische Verbindung (B). Danach kann man das Wasser (C) ganz oder teilweise entfernen.

In einer anderen Ausführungsform der vorliegenden Erfindung suspendiert man mindestens eine Verbindung (B) in einer Lösung von mindestens einer Verbindung (A) in Wasser (C), beispielsweise in 10 Vol.-% bis zum 10-flachen (bezogen auf Volumen), bezogen auf die Summe an Verbindung (A) und Verbindung (B). Danach kann man das Wasser (C) ganz oder teilweise entfernen.

In einer anderen Ausführungsform der erfindungsgemäßen Herstellungsverfahrens geht man so vor, dass man in Gegenwart von Wasser (C) und
(A) einem oder mehreren Aminocarboxylat(e) (A), gewählt aus Methylglycindiacetat (MGDA) und seinen Alkalimetallsalzen und Glutaminsäurediacetat (GLDA) und seinen Alkalimetallsalzen, oder
(B) mindestens eine Verbindung, bevorzugt mindestens zwei Verbindungen (B), jeweils gewählt aus Herbiziden, die gewählt sind aus organischen Phosphaten, organischen Phosphiten und organischen Phosphonaten und Salzen der vorstehend genannten Verbindungen,
in Gegenwart von mindestens einem anorganischem Stoff (E) herstellt und gegebenenfalls das Wasser (C) vollständig oder teilweise entfernt.

So ist es beispielsweise möglich, als anorganischen Stoff (E) Kaliumhydroxid zu wählen und dadurch das Kaliumsalz von Verbindung (B) *in situ* herzustellen.

Bevorzugt wählt man als anorganischen Stoff (E) ein oder mehrere Ammoniumsalze von Mineralsäuren, insbesondere Ammoniumsulfat.

In einer anderen Variante setzt man Kaliumhydroxid als anorganischen Stoff (E) ein und vermischt in Gegenwart von Wasser (C) mit Aminocarboxylat(en) (A) oder Polyaminocarboxylat(en) als freie Säure(n) und stellt auf diese Art Kaliumsalze von Aminocarboxylat(en) (A) bzw. Polyaminocarboxylat(en) her.

Gegebenenfalls kann man jeweils vor oder nach dem Entfernen des Wassers (C) zusätzlich mit mindestens einem weiteren Stoff, gewählt aus
(D) organische Verbindungen, die gewählt sind aus Harnstoff und Zitronensäure und ihren Alkalimetallsalzen,
(E) anorganischen Stoffen, insbesondere Ammoniumsulfat, und
(F) Zusätzen, gewählt aus Netzmitteln, Tensiden, Spreitungsmitteln und Sprühhilfsmitteln, oder mit mindestens einem Polyaminocarboxylat vermischen.

In einer anderen Ausführungsform kann man zusätzlich mit mindestens einem weiteren Stoff, gewählt aus
(D) organische Verbindungen, die gewählt sind aus Harnstoff und Zitronensäure und ihren Alkalimetallsalzen,
(E) anorganischen Stoffen, insbesondere Ammoniumsulfat, und
(F) Zusätzen, gewählt aus Netzmitteln, Tensiden, Spreitungsmitteln und Sprühhilfsmitteln, oder mit mindestens einem Polyaminocarboxylat vermischen, ohne das Wasser (C) zu entfernen.

In einer Ausführungsform der erfindungsgemäßen Herstellungsverfahrens geht man so vor, dass man Wasser (C) - ganz oder vorzugsweise teilweise - entfernt, beispielsweise durch Verdampfen, Abdestillieren, Gefriertrocknen, insbesondere durch Sprühtrocknen oder Sprühgranulieren. In einer anderen Ausführungsform belässt man das während der erfindungsgemäßen Herstellung eingesetzte Wasser in erfindungsgemäßer Formulierung.

Ein weiterer Gegenstand der vorliegenden Erfindung ist ein Verfahren zum Düngen von Pflanzen, dadurch gekennzeichnet, dass man mindestens eine erfindungsgemäße Formulierung maschinell oder manuell auf Land und/oder Pflanzen aufbringt.

Erfindungsgemäße Formulierungen lassen sich besonders gut lagern und transportieren. Ein weiterer Gegenstand der vorliegenden Erfindung ist daher ein Verfahren zur Lagerung von Verbindungen (B), dadurch gekennzeichnet, dass man sie in Form einer erfindungsgemäßen Formulierung lagert. Ein weiterer Gegenstand der vorliegenden Erfindung ist ein Verfahren zum Transportieren von Verbindungen (B), dadurch gekennzeichnet, dass man sie in Form einer erfindungsgemäßen Formulierung transportiert.

Unter Lagern wird dabei im Rahmen der vorliegenden Erfindung verstanden, dass man Verbindungen (B) über einen Zeitraum von mindestens einem Tag aufbewahrt, ohne dass man eine chemische Reaktion an Verbindung (B) durchführt.

Unter Transportieren wird dabei im Rahmen der vorliegenden Erfindung verstanden, dass man Verbindung (B) mit Hilfe eines Transportmittels außerhalb einer chemischen Produktionsanlage über eine gewisse Strecke befördert, beispielsweise mindestens 100 m, bevorzugt 1 km bis 10.000 km. Geeignete Transportmittel sind Eisenbahnwaggons, Lastkraftwagen, Schiffe und Flugzeuge.

Erfindungsgemäßes Lagern kann man in Lagerbehältern von beliebiger Größe durchführen, beispielsweise in Silos, Bunkern, Kellern und Tankbehältern aus Kunststoff (IBC) oder aus Metall. Der Befüllungsgrad des Behälters ist von 1 bis 100 Vol.-% und die Verdünnung ist bis 10.000:1 frei wählbar.

Man kann beispielsweise mindestens einen Tag lang erfindungsgemäß lagern, bevorzugt sind mindestens zwei Tage bis zu einem Jahr.

Man kann beispielsweise über einen Zeitraum von 1 bis 10 Tage erfindungsgemäß transportieren.

Man kann beispielsweise bei einer Temperatur im Bereich von null bis 60°C erfindungsgemäß lagern bzw. transportieren, die Temperatur kann aber auch darüber oder darunter liegen. So kann man beispielsweise auch bei Frost erfindungsgemäß lagern oder transportieren, beispielsweise bei -70 bis -0,5°C.

Die Erfindung wird durch Arbeitsbeispiele erläutert.

Alle %-Angaben sind Gew.-%, wenn nicht ausdrücklich anders angegeben.

### Beispiele:

### I. Herstellung von Konzentraten

### 1.1 Herstellung von Vergleichskonzentrat V-K.1

Man löste 275 g Ammoniumsulfat (E.1) in 400 g Wasser. Danach setzte man 70 g Glyphosat (freie Säure) (B.1) sowie 56 g Glyphosat-Monoisopropylammonium-Salz (B.2) zu. Anschließend fügte man Wasser bis zu einem Gesamtgewicht von 1000 g zu. Man erhielt Vergleichskonzentrat V-K.1.

### I.2 Herstellung von erfindungsgemäßer Formulierung K.2

Man legte 620 g einer 40 Gew.-% wässrigen Lösung von Methylglycindiacetattrinatriumsalz (A.1) vor und löste darin 70 g Glyphosat (freie Säure) (B.1) sowie 56 g Glyphosat-Monoisopropylammonium-Salz (B.2). Anschließend fügte man Wasser bis zu einem Gesamtgewicht von 1000 g zu. Man erhielt erfindungsgemäße Formulierung K.2.

### I.3 Herstellung von erfindungsgemäßer Formulierung K.3

Man legte 710 g einer 40 Gew.-% wässrigen Lösung von Methylglycindiacetattrikaliumsalz (A.2) vor und löste darin 70 g Glyphosat (freie Säure) (B.1) sowie 56 g Glyphosat-Monoisopropylammonium-Salz (B.2). Anschließend fügte man Wasser bis zu einem Gesamtgewicht von 1000 g zu. Man erhielt erfindungsgemäße Formulierung K.3.

### I.4 Herstellung von erfindungsgemäßer Formulierung K.4

Man legte 710 g einer 40 Gew.-% wässrigen Lösung von Methylglycindiacetattrinatriumsalz (A.1) vor und löste darin 70 g Glyphosat (freie Säure) (B.1) sowie 56 g Glyphosat-Monoisopropylammonium-Salz (B.2). Danach gab man 120 g Ammoniumsulfat (E.1) zu. Anschließend fügte man Wasser bis zu einem Gesamtgewicht von 1000 g zu. Man erhielt erfindungsgemäße Formulierung K.4.

### I.5 Herstellung von erfindungsgemäßer Formulierung K.5

Man legte 670 g einer 40 Gew.-% wässrigen Lösung von Glutaminsäurediacetattrinatriumsalz (A.3) vor und löste darin 70 g Glyphosat (freie Säure) (B.1) sowie 56 g Glyphosat-Monoisopropylammonium-Salz (B.2). Anschließend fügte man Wasser bis zu einem Gesamtgewicht von 1000 g zu. Man erhielt erfindungsgemäße Formulierung K.5.

### I.6 Herstellung von Vergleichskonzentrat V-K.6

Man löste 275 g Ammoniumsulfat (E.1) in 400 g Wasser. Danach setzte man 70 g Glyphosat (freie Säure) (B.1) sowie 56 g Glyphosat-Monoisopropylammonium-Salz (B.2) zu. Danach setzte man 120 g ethoxyliertes Talgfettamin (15 Ethylenoxideinheiten pro mol) zu. Anschließend fügte man Wasser bis zu einem Gesamtgewicht von 1000 g zu. Man erhielt Vergleichskonzentrat V-K.6.

### I.7 Herstellung von erfindungsgemäßer Formulierung K.7

Man legte 620 g einer 40 Gew.-% wässrigen Lösung von Methylglycindiacetattrinatriumsalz (A.1) vor und löste darin 70 g Glyphosat (freie Säure) (B.1) sowie 56 g Glyphosat-Monoisopropylammonium-Salz (B.2). Danach setzte man 120 g ethoxyliertes Talgfettamin (15 Ethylenoxideinheiten pro mol) zu. Anschließend fügte man Wasser bis zu einem Gesamtgewicht von 1000 g zu. Man erhielt erfindungsgemäße Formulierung K.7.

### I.8 Herstellung von erfindungsgemäßer Formulierung K.8

Man legte 710 g einer 40 Gew.-% wässrigen Lösung von Methylglycindiacetattrikaliumsalz (A.2) vor und löste darin 70 g Glyphosat (freie Säure) (B.1) sowie 56 g Glyphosat-Monoisopropylammonium-Salz (B.2). Danach setzte man 120 g ethoxyliertes Talgfettamin (15 Ethylenoxideinheiten pro mol) zu. Anschließend fügte man Wasser bis zu einem Gesamtgewicht von 1000 g zu. Man erhielt erfindungsgemäße Formulierung K.8.

### I.9 Herstellung von erfindungsgemäßer Formulierung K.9

Man legte 730 g einer 40 Gew.-% wässrigen Lösung von Glutaminsäurediacetattrinatriumsalz (A.3) vor und löste darin 70 g Glyphosat (freie Säure) (B.1) sowie 56 g Glyphosat-Monoisopropylammonium-Salz (B.2). Danach setzte man 120 g ethoxyliertes Talgfettamin (15 Ethylenoxideinheiten pro mol) zu. Anschließend fügte man Wasser bis zu einem Gesamtgewicht von 1000 g zu. Man erhielt erfindungsgemäße Formulierung K.9.

### I.10 Herstellung von erfindungsgemäßer Formulierung K.10

Man legte 510 g einer 40 Gew.-% wässrigen Lösung von Methylglycindiacetattrikaliumsalz (A.2) vor und löste darin 20 g Glyphosat (freie Säure) (B.1) sowie 14 g Glyphosat-Monoisopropylammonium-Salz (B.2). Danach setzte man 90 g ethoxyliertes Talgfettamin (15 Ethylenoxideinheiten pro mol) zu. Anschließend fügte man Wasser bis zu einem Gesamtgewicht von 1000 g zu. Man erhielt erfindungsgemäße Formulierung K.10.

### I.11 Herstellung von Sprühlösungen (allgemeine Vorschriften)

### I.11.1 Herstellung von Sprühlösungen I

Man verdünnte 50 g einer erfindungsgemäßen Formulierung K.2 mit Wasser (110 ppm Wasserhärte) auf 1000 g (1/20). Man erhielt erfindungsgemäße Sprühlösung SL.2.

Man ging analog mit Vergleichskonzentrat V-K.1 und mit den erfindungsgemäßen Formulierungen K.3 bis K.5 vor. Man erhielt Vergleichssprühlösung V-SL.1 bzw. die erfindungsgemäßen Sprühlösungen SL.3 bis SL.5.

### I.11.2 Herstellung von Sprühlösungen II

Man verdünnte 1 g einer erfindungsgemäßen Formulierung K.7 mit Wasser (110 ppm Wasserhärte) auf 1000 g (1/1000). Man erhielt erfindungsgemäße Sprühlösung SL.7.

Man ging analog mit Vergleichskonzentrat V-K.6 und mit den erfindungsgemäßen Formulierungen K.8 bis K.10 vor. Man erhielt Vergleichssprühlösung V-SL.6 bzw. die erfindungsgemäßen Sprühlösungen SL.8 bis SL.10.

### II. Untersuchungen auf Bodensegmenten

### II.1 Mineralisierungsexperimente, allgemeine Vorschrift am Beispiel von SL.2

Man gab 1 kg Lockersediment-Braunerde aus Süddeutschland mit einem Wassergehalt von 23%, einem pH-Wert von 6,1-6,3 und einem mineralischen Anteil von 45% (Zusammensetzung des Mineralanteils: 38% Quarz, 20% Karbonate, 20% Glimmer, 9% Tonmineral, 7% Feldspat, 3% Eisenoxid; darin enthalten Al-Gehalt 1,7 %, Ca-Gehalt 1,4 %, Fe-Gehalt 2,1 %, PhosphatGehalt (bestimmt als P₂O₅) von 240 mg P₂O₅/kg Erde) in ein rundes Gefäß (Durchmesser 12 cm).

Man besprühte die Erde mit 240 ml erfindungsgemäßer Sprühlösung SL.2 mittels eines Zerstäubers, indem man über einen Zeitraum von 48 Stunden alle 6 Stunden je 30 ml der erfindungsgemäßen Sprühlösung SL.2 auf die Oberfläche der Braunerde zerstäube. Anschließend lagerte man die Erde ohne Abdeckung der Gefäße weitere 72 h bei 20°C.

Zur Analyse überführte man die Erde anschließend in ein 2 Liter-Gefäß und schlämmte sie bei 20°C mit 1 Liter Wasser auf. Man rührte 20 Minuten und trennte die Erden mit einer Filternutsche vom Filtrat getrennt. Das Aufschlämmen und Abfiltrieren wurde zweimal wiederholt. In einem Rotationsverdampfer zog man das Wasser der gesammelten Filtrate ab. Man analysierte den Rückstand auf Glyphosat-Gehalt (HPLC).

Die Dosierung von Glyphosat bezogen auf die Säure lag also bei 1340 mg. Entsprechend berechnete sich der Anteil an eluiertem bzw. die Menge an mineralisiertem, im Boden fixiertem Glyphosat.

Zur Untersuchung der Vergleichssprühlösung V-SL.1 bzw. die erfindungsgemäßen Sprühlösungen SL.3 bis SL.5 ging man analog vor. Die Ergebnisse sind in Tabelle 1 zusammengefasst.

**Tabelle 1: Untersuchungen an Bodenproben**

| | V-SL.1 | SL.2 | SL.3 | SL.4 | SL.5 |
|---|---|---|---|---|---|
| Glyphosat mineralisiert [mg] | 1236 | 410 | 250 | 246 | 700 |
| Glyphosat mineralisiert [%] | 92,2 | 30,6 | 18,7 | 18,4 | 52,2 |
| Glyphosat eluiert [mg] | 104 | 930 | 1090 | 1094 | 640 |

### II.2 Langzeit-Mineralisierungsexperimente in Abhängigkeit von der Probentiefe, allgemeine Vorschrift am Beispiel von SL.7

In einem weiteren Versuch wurde Ackerboden (Lockersedimentbraunerde) auf überdachten Parzellen von jeweils 1 m² über einen Zeitraum von 60 Tagen mit den Sprühlösungen II behandelt. Die Schicht der Lockersedimentbraunerde war 90 cm mächtig

Eine Parzelle wurden über einen Zeitraum von 8 Wochen mit jeweils insgesamt 10 Liter SL.7/m² beaufschlagt und mit 50 Liter Wasser/m² künstlich beregnet (Wasserhärte < 10 ppm). Dazu besprühte man alle 3 Tage mit 0,5 Liter SL.7 und beregnete 6 Stunden danach mit 2,5 I Wasser (Wasserhärte < 10 ppm). Nach der 8 Wochen langen Behandlung wurde noch ohne Aufbringung anderer Stoffe 8 Wochen weiter beregnet (alle 3 Tage 3 Liter/m²).

Danach unternahm man mit einem Erdbohrer (Durchmesser 10 cm) Kernbohrungen bis in eine Tiefe von 80 cm. Man entnahm 4 Bohrkerne, um für die nachfolgenden Untersuchungen repräsentative Mittelwerte zu erhalten. Man unterteilte die Bohrkerne in Scheiben einer Dicke von 10 cm. Von diesen Scheiben bestimmte man jeweils - wie unter II.1 beschrieben - den mit Wasser eluierbaren Glyphosat-Anteil.

**Tabelle 2: Untersuchung an Bodenproben in den Langzeitversuchen**

| | V-SL.6 | SL.7 | SL.8 | SL.9 | SL.10 |
|---|---|---|---|---|---|
| [mg] Glyphosat eluiert Tiefe 0-10 cm | 82 | 360 | 393 | 387 | 93 |
| [mg] Glyphosat eluiert Tiefe 10-20 cm | 22 | 290 | 301 | 279 | 26 |
| [mg] Glyphosat eluiert Tiefe 20-30 cm | 9 | 47 | 49 | 39 | 7 |
| [mg] Glyphosat eluiert Tiefe 40-50 cm | - | 15 | 15 | 12 | - |
| [mg] Glyphosat eluiert Tiefe 60-70 cm | - | 4 | 3 | - | - |
| [mg] Glyphosat eluiert Tiefe 70-80 cm | - | - | - | - | - |

Die experimentellen Befunde zeigen, dass sich die Verfügbarkeit von Glyphosat durch den Zusatz von Aminocarboxylaten (A) trotz einer gewissen Härte des Wassers (Sprühlösung) und Gegenwart von Bodenmineralien sich auf einem hohen Niveau befindet. Auch SL.10, in der lediglich 26% des Glyphosat-Anteils, verglichen mit V-SL.6, enthalten ist, zeigte sich V-SL.6 überlegen, was den eluierbaren Glyphosat-Anteil betraf.

## Patentansprüche

1. Verwendung von Formulierungen, enthaltend
(A) ein oder mehrere Aminocarboxylate, gewählt aus Methylglycindiacetat (MGOA) und seinen Alkalimetallsalzen und Glutaminsäurediacetat (GLDA) und seinen Alkalimetallsalzen,
(B) mindestens eine organische Verbindung, gewählt aus organischen Phosphaten, organischen Phosphonaten und organischen Phosphiten und Salzen der vorstehend genannten organischen Verbindungen, und
(C) gegebenenfalls Wasser,
zum Aufbringen auf Pflanzen oder Land.

2. Verwendung nach Anspruch 1, **dadurch gekennzeichnet, dass** man organische Verbindung (B) wählt aus Herbiziden.

3. Verwendung nach Anspruch 1 oder 2, **dadurch gekennzeichnet, dass** man organische Verbindung (B) wählt aus Glyphosat und Salzen der vorstehend genannten organischen Verbindung.

4. Verwendung nach einem der Ansprüche 1 bis 3, **dadurch gekennzeichnet, dass** die Formulierung mindestens Netzmittel enthält.

5. Formulierung, enthaltend
(A) ein oder mehrere Aminocarboxylate, gewählt aus Methylglycindiacetat (MGDA) und seinen Alkalimetallsalzen und Glutaminsäurediacetat (GLDA) und seinen Alkalimetallsalzen,
(B) mindestens eine organische Verbindung, gewählt aus Herbiziden, die gewählt sind aus organischen Phosphaten, organischen Phosphonaten und organischen Phosphiten und Salzen der vorstehend genannten organischen Verbindungen, und
(C) gegebenenfalls Wasser.

6. Formulierung nach Anspruch 5, **dadurch gekennzeichnet, dass** sie mindestens ein Aminocarboxylat (A) und mindestens ein Polyaminocarboxylat enthält.

7. Formulierung nach Anspruch 5 oder 6, **dadurch gekennzeichnet, dass** man organische Verbindung (B) wählt aus Glyphosat und Isopropylaminglyphosat und Salzen der vorstehend genannten organischen Verbindungen.

8. Verfahren zum Anbau von Pflanzen, **dadurch gekennzeichnet, dass** man Land oder Pflanze mindestens einmal vor der Emte der betreffenden Pflanze mit einer Formulierung nach einem der Ansprüche 5 bis 7 behandelt.

9. Verfahren zum Lagern oder Transportieren von mindestens einer organischen Verbindung (B), gewählt aus Herbiziden, die gewählt sind aus organischen Phosphaten, organischen Phosphonaten und organischen Phosphiten und Salzen der vorstehend genannten organischen Verbindungen (B), **dadurch gekennzeichnet, dass** man sie in Form einer Formulierung nach einem der Ansprüche 5 bis 7 lagert bzw. transportiert.

## Claims

1. The use of formulations comprising
(A) one or more aminocarboxylates, selected from among methylglycine diacetate (MGDA) and its alkali metal salts, and glutamic acid diacetate (GLDA) and its alkali metal salts,
(B) at least one organic compound selected from among organic phosphates, organic phosphonates and organic phosphites and salts of the abovementioned organic compounds, and
(C) optionally water,
for application to plants or the ground.

2. The use according to claim 1, wherein organic compound (B) is selected from among herbicides.

3. The use according to claim 1 or 2, wherein organic compound (B) is selected from among glyphosate and salts of the abovementioned organic compound.

4. The use according to any of claims 1 to 3, wherein the formulation comprises at least wetter.

5. A formulation comprising
(A) one or more aminocarboxylates, selected from among methylglycine diacetate (MGDA) and its alkali metal salts, and glutamic acid diacetate (GLDA) and its alkali metal salts,
(B) at least one organic compound selected from among herbicides which are selected from among organic phosphates, organic phosphonates and organic phosphites and salts of the abovementioned organic compounds, and
(C) optionally water.

6. The formulation according to claim 5, which comprises at least one aminocarboxylate (A) and at least one polyaminocarboxylate.

7. The formulation according to claim 5 or 6, wherein organic compound (B) is selected from among glyphosate and isopropylamineglyphosate and salts of the abovementioned organic compounds.

8. Method of growing plants, wherein the ground or plant is treated at least once with a formulation according to any of claims 5 to 7 before the plant in question is harvested.

9. A method of storing or transporting at least one organic compound (B) selected from among herbicides which are selected from among organic phosphates, organic phosphonates and organic phosphites and salts of the abovementioned organic compound (B), wherein the at least one organic compound (B) is stored and/or transported in the form of the formulation according to any of claims 5 to 7.

## Revendications

1. Utilisation de formulations contenant
(A) un ou plusieurs aminocarboxylates, choisis parmi le diacétate de méthylglycine (MGDA) et ses sels de métal alcalin et le diacétate de l'acide glutaminique (GLDA) et ses sels de métal alcalin,
(B) au moins un composé organique, choisi parmi les phosphates organiques, les phosphonates organiques et les phosphites organiques et les sels des composés organiques susmentionnés, et
(C) le cas échéant de l'eau
pour l'application sur des plantes ou la terre.

2. Utilisation selon la revendication 1, **caractérisée en ce qu'**on choisit le composé organique (B) parmi les herbicides.

3. Utilisation selon la revendication 1 ou 2, **caractérisée en ce qu'**on choisit le composé organique (B) parmi le glyphosate et les sels du composé organique susmentionné.

4. Utilisation selon l'une quelconque des revendications 1 à 3, **caractérisée en ce que** la formulation contient au moins un agent mouillant.

5. Formulation contenant
(A) un ou plusieurs aminocarboxylates, choisis parmi le diacétate de méthylglycine (MGDA) et ses sels de métal alcalin et le diacétate de l'acide glutaminique (GLDA) et ses sels de métal alcalin,
(B) au moins un composé organique, choisi parmi les herbicides, qui sont choisis parmi les phosphates organiques, les phosphonates organiques et les phosphites organiques et les sels des composés organiques susmentionnés, et
(C) le cas échéant de l'eau.

6. Formulation selon la revendication 5, **caractérisée en ce qu'**elle contient au moins un aminocarboxylate (A) et au moins un polyaminocarboxylate.

7. Formulation selon la revendication 5 ou 6, **caractérisée en ce qu'**on choisit le composé organique (B) parmi le glyphosate et glyphosate d'isopropylamine et les sels des composés organiques susmentionnés.

8. Procédé pour cultiver des plantes, **caractérisé en ce qu'**on traite la terre ou les plantes au moins une fois avant la récolte des plantes concernées par une formulation selon l'une quelconque des revendications 5 à 7.

9. Procédé pour entreposer ou transporter au moins un composé organique (B), choisi parmi les herbicides, qui sont choisis parmi les phosphates organiques, les phosphonates organiques et les phosphites organiques et les sels des composés organiques (B) susmentionnés, **caractérisé en ce qu'**on l'entrepose ou le transporte sous forme d'une formulation selon l'une quelconque des revendications 5 à 7.
